# EUROPEAN PATENT APPLICATION

(11) **EP 4 773 022 A1**
(43) Date of publication of application: **08.07.2026**
(21) Application number: 24858575.4
(22) Date of filing: 27.08.2024
(51) Int. Cl.: G06F 16/9538

(54) **ENTITY SEARCH RESULT DISPLAY METHOD, GENERATION METHOD, APPARATUS, DEVICE AND MEDIUM**

(30) Priority: 28.08.2023 CN 202311091578
(71) Applicant: Beijing Zitiao Network Technology Co., Ltd., Beijing 100190 (CN)
(72) Inventor: XUE, Weiwei, Beijing 100028 (CN); TIAN, Lin, Beijing 100028 (CN); GUO, Feifei, Beijing 100028 (CN)
(74) Representative: Grünecker Patent- und Rechtsanwälte PartG mbB
(86) International application number: PCT/CN2024/114892
(87) International publication number: WO 2025/045040

(57) **Abstract**

The embodiments of the disclosure provide methods, apparatuses, devices and media for displaying an entity search result and those for generating an entity search result. The method for displaying an entiry search result includes: obtaining, in response to a search of a current user for a target search term, a first search result corresponding to the target search term from a server, the target search term being a search term for an entity object; and displaying the first search result in a result display region of a search result page, the first search result containing at least one sub-search result, different sub-search results corresponding to different target search requirements, the target search requirement being a search requirement of the current user, and different sub-search results being displayed in different display sub-regions of the result display region in accordance with requirement intensities of the corresponding target search requirements. With the above solution of embodiments of this disclosure, the accuracy and practicability of the displayed search result can be improved.

## Description

This application claims the priority to Chinese Patent Application No. 202311091578.8, filed on August 28, 2023 and entitled "ENTITY SEARCH RESULT DISPLAY METHOD, GENERATION METHOD, APPARATUS, DEVICE AND MEDIUM," the entire contents of which are incorporated herein by reference.

### FIELD

The embodiment of the disclosure relates to the technical field of computers, in particular to a method for displaying an entity search result, a method for generating an entity search result, and an apparatus, a device and a medium thereof.

### BACKGROUND

The search of entity refers to searching for an entity object, for example, searching for entity objects based on a name. In the related art, when a search term of a user is received, the search engine invokes an inverted index to query a result that matches the search term. However, since the search term for the entity class is usually short and the provided information is limited, the returned result may be only literally associated, but the accuracy is not high.

### SUMMARY

The embodiments of the disclosure provide a method for displaying an entity search result, a method for generating an entity search result, and an apparatus, a device and a medium thereof, to improve the accuracy of entity search results.

According to a first aspect, an embodiment of the present disclosure provides a method for displaying an entity search result, comprising: obtaining, in response to a search of a current user for a target search term, a first search result corresponding to the target search term from a server, the target search term being a search term for an entity object; and displaying the first search result in a result display region of a search result page, the first search result containing at least one sub-search result, different sub-search results corresponding to different target search requirements, the target search requirement being a search requirement of the current user, and different sub-search results being displayed in different display sub-regions of the result display region in accordance with requirement intensities of the corresponding target search requirements.

According to a second aspect, an embodiment of the present disclosure further provides a method for generating an entity search result, comprising: obtaining a target search term inputted by a current user in a client, the target search term being a search term for an entity object; determining at least one target search requirement of the current user based on the target search term and attribute information of the current user; obtaining a sub-search result corresponding to each target search requirement; and generating a first search result containing the sub-search result, and sending the first search result to the client for display, wherein different sub-search results are displayed in different display sub-regions of a search result page in accordance with requirement intensities of the corresponding search requirements, and the display sub-regions are sub-regions of a result display region in the search result page.

According to a third aspect, an embodiment of the present disclosure further provides an apparatus for displaying an entity search result, comprising: a first result obtaining module configured to obtain, in response to a search of a current user for a target search term, a first search result corresponding to the target search term from a server, the target search term being a search term for an entity object; and a result display module configured to display the first search result in a result display region of a search result page, the first search result containing at least one sub-search result, different sub-search results corresponding to different target search requirements, the target search requirement being a search requirement of the current user, and different sub-search results being displayed in different display sub-regions of the result display region in accordance with requirement intensities of the corresponding target search requirements.

According to a fourth aspect, an embodiment of the present disclosure further provides an apparatus for generating an entity search result, comprising: a search term obtaining module configured to obtain a target search term inputted by a current user in a client, the target search term being a search term for an entity object; a first requirement determination module configured to determine at least one target search requirement of the current user based on the target search term and attribute information of the current user; a second result obtaining module configured to obtain a sub-search result corresponding to each target search requirement; and a result sending module configured to generate a first search result containing the sub-search result, and send the first search result to the client for display, wherein different sub-search results are displayed in different display sub-regions of a search result page in accordance with requirement intensities of the corresponding search requirements, and the display sub-regions are sub-regions of a result display region in the search result page.

According to a fifth aspect, an embodiment of the present disclosure further provides an electronic device, comprising: one or more processors; and a memory storing one or more programs that, when executed by one or more processors, cause the more or processors to perform the method for displaying an entity search result or the method for generating an entity search result.

According to a sixth aspect, an embodiment of the present disclosure further provides a computer-readable storage medium storing computer instructions that, when executed by a processor, cause the processor to implement the method for displaying an entity search result or the method for generating an entity search result.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and components and elements are not necessarily drawn to scale.
FIG. 1 is a schematic flowchart of a method for displaying an entity search result according to an embodiment of the present disclosure;
FIG. 2 is a schematic diagram of a display of an entity search result according to an embodiment of the present disclosure;
FIG. 3 is an schematic diagram of another display of an entity search result according to an embodiment of the present disclosure;
FIG. 4 is a schematic flowchart of a method for generating an entity search result according to an embodiment of the present disclosure;
FIG. 5 is a structural block diagram of an apparatus for displaying an entity search result according to an embodiment of the present disclosure;
FIG. 6 is a structural block diagram of an apparatus for generating an entity search result according to an embodiment of the present disclosure;
FIG. 7 is a schematic structural diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein. Rather, these embodiments are provided for a more thorough and complete understanding of the present disclosure. It should be understood that the drawings and embodiments of the present disclosure are for illustrative purposes only and are not intended to limit the scope of the present disclosure.

It should be understood that various steps described in method implementations of the present disclosure may be performed in different order and/or in parallel. Furthermore, method implementations may include additional steps and/or omit steps that are shown. The scope of the present disclosure is not limited in this regard.

The terms "comprise" and its variants used herein are to be read as open terms that mean "include, but is not limited to." The term "based on" is to be read as "based at least in part on." The term "one embodiment" is to be read as "at least one embodiment," the term "another embodiment" is to be read as "at least one another embodiment," and the term "some embodiments" is to be read as "at least some embodiments." Other definitions of related terms might be included below.

It should be noted that the concepts of "first," "second" and the like mentioned in the present disclosure are only used to distinguish between different apparatuses, modules or units, rather than limiting the order or interdependence of the functions performed by these apparatuses, modules or units.

It should be noted that modifications "one" and "more" mentioned in the present disclosure are examples but not limiting, and should be understood as "one or more" to those skilled in the art unless otherwise specified.

Names of messages or information exchanged between the plurality of apparatuses in implementations of the present disclosure are used for illustrative purposes only and are not intended to limit the scope of those messages or information.

It will be appreciated that before using the technical solution disclosed in each embodiment of the present disclosure, users should be informed of the type, the scope of use, the use scenario, etc. of the personal information involved in the present disclosure in an appropriate manner in accordance with relevant laws and regulations, and the user's authorization should be obtained.

For example, in response to receiving an active request from a user, a prompt information is sent to the user to explicitly prompt the user that the operation requested by the user will need to obtain and use the user's personal information. Thus, users may autonomously select whether to provide personal information to the software or the hardware such as an electronic device, an application, a server or a storage medium that perform the operation of the technical solution of the present disclosure according to the prompt information.

As an optional but non-restrictive implementation, in response to receiving an active request from a user, the way of sending prompt information to the user may be, for example, a pop-up window in which prompt information may be presented in text. In addition, pop-up windows may also contain selection controls for users to choose "agree" or "disagree" to provide personal information to electronic devices.

It will be appreciated that the above notification and acquisition of user authorization process are only schematic and do not limit the implementation of the present disclosure. Other methods that meet relevant laws and regulations may also be applied to the implementation of the present disclosure.

It may be understood that the data involved in the technical solution (including but not limited to the data itself, the acquisition or use of the data) should follow the requirements of the corresponding laws and regulations and related regulations.

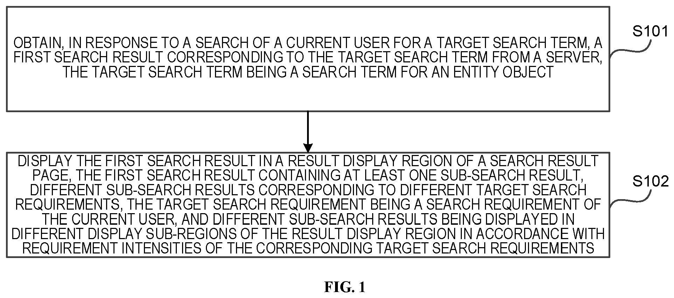

FIG. 1 is a schematic flowchart of a method for displaying an entity search result according to an embodiment of the present disclosure. The method may be performed by an apparatus for displaying an entity search result, where the apparatus may be implemented by software and/or hardware, may be disposed in an electronic device, and is typically configured in a mobile phone or a tablet computer. The method for displaying an entity search result provided by the embodiments of the present disclosure is applicable to a scenario in which entity objects are searched, and is particularly applicable to a scenario in which entity objects are searched based on a video search engine in a video application.

The search of the entity refers to searching for a name, for example, a search term such as a person name, a place name, a mechanism, an event, a work, a product, and the like. Such search terms are relatively short, but the requirement for entities is very multivariate. For example, searching for a person's name may be a desire to know about the basic information such as height, weight, and the like, or may be a desire to find the latest news, or even want to query the network for the comment about the person, the requirements are many and complicated. Generally, when receiving a search term of a user, a search engine invokes an inverted index to query and search result matching more closely. However, the entity term is usually short and the information provided is limited, therefore there may be many returned results literally associated, but what meets the user's expectations may not necessarily be provided.

In the development process of a search engine, a general search engine usually relies on a knowledge graph. Information about various aspects of the entity is stored in advance through the knowledge graph, and is displayed to the user in a relatively good organization manner. In this way, no matter what type of requirement the user needs, it can be found in a comprehensive knowledge graph panel. However, such a displaying manner with the knowledge graph is not suitable for a video-based search engine. The main reason is that in the video search engine, the video is the main body consumed by the user, while the display form of the traditional knowledge graph is basically dependent on the image-text to satisfy the user.

In view of this, the embodiment of this disclosure provides a method for displaying an entity search result, which performs display of a search result based on a user's requirement, so as to improve accuracy of a displayed search result, thereby meeting a search requirement of a user.

FIG. 1 shows a method for displaying an entity search result according to this embodiment.

S101: obtaining, in response to a search of a current user for a target search term, a first search result corresponding to the target search term from a server, the target search term being a search term for an entity object.

In some embodiments, the search may be a trigger operation for indicating a search, for example, an operation of triggering a search control after the search term is input. The target search term is a search term corresponding to the search operation, that is, the search term indicated by the search operation. The target search term may be a search term input into the search box by the current user, for example, a search term input by the current user to the search box in a character input manner, or a search term input into the search box by the current user by triggering a candidate search term. The target search term is a search term for the entity object. The entity object may be considered to be a non-virtual object, such as a person, place, event, work, product, or the like. The current user may be considered a user performing a search for the target search term. The first search result may be a search result corresponding to the target search term, for example, a search result returned by the server based on the target search term. The first search result may comprise at least one sub-search result, and different sub-search results may correspond to different search requirements of the current user.

Specifically, when the search operation of the current user for the target search term is received, the first search result corresponding to the target search term may be obtained from the server. For example, the search request carrying the target search term is sent to the server, and the first search result returned by the server based on the search request and the search requirement of the current user is received.

S102: displaying the first search result in a result display region of a search result page, the first search result containing at least one sub-search result, different sub-search results corresponding to different target search requirements, the target search requirement being a search requirement of the current user, and different sub-search results being displayed in different display sub-regions of the result display region in accordance with requirement intensities of the corresponding target search requirements.

The search result page may be considered as a page for displaying search results. The search result page may include a result display region, which may be considered as an region in the search result page that is used to display a sub-search result corresponding to the search requirement of the current user. The result display region may contain one or more display sub-regions, and different display sub-regions may be used to display different sub-search results corresponding to different search requirements of the current user in the first search result. The target search requirement may be a search requirement of the current user, for example, a search requirement of a corresponding sub-search result of the current user in the first sub-search result.

Optionally, the search result page further contains a requirement display region and/or an object display region, a requirement identification of at least one target search requirement is displayed in the the requirement display region, object information of a target entity object in a current application is displayed in the object display region, and the target entity object is an entity object corresponding to the target search term.

In some embodiments, the requirement display region may be considered as an region in the search result page for displaying a requirement identification of a target search requirement of the current user. The requirement identification is an identification of the target search requirement, and different requirement identifications correspond to different target search requirements. The requirement identification may be used to trigger display of a search result corresponding to the corresponding search requirement. When the current user has multiple target search requirements, the display order of the requirement identifications of various target search requirements in the requirement display region may be set as needed. Optionally, the requirement identification of the at least one target search requirement is displayed in accordance with the requirement intensity of the corresponding target search requirement. For example, the requirement identification of respective target search requirement may be displayed in the requirement display region in descending order of corresponding requirement intensities.

The object display region may be considered as an region in the search result page for displaying object information of the target entity object in the current application, for example, an region for displaying basic information of the target entity object in the current application. The basic information may include, for example, an object identification of the target entity object and/or introduction information of the target entity object. The object identification may be considered as an identification of the target entity object, for example, a name of the target entity object and/or an avatar of the target entity object. The target entity object may be an entity object corresponding to the target search term.

The relative positions of the result display region, the requirement display region and the object display region may be set as needed. For example, the object display region, the requirement display region and the result display region may be sequentially set in the search result page according to the order from top to bottom. In other words, along the display direction of the search result page, the object display region is located above the requirement display region, and the result display region is located below the requirement display region.

Specifically, after obtaining the first search result corresponding to the target search term, the first search result may be displayed in the result display region of the search result page. For example, the sub-search results corresponding to different target search requirements in the first search result are displayed in different sub-regions of the result display region according to the requirement intensity of the corresponding target search requirement. For example, the sub-search results corresponding to the target search requirements are displayed in different sub-regions of the result display region in descending order of the requirement intensity.

According to the method for displaying an entity search result, the method for generating an entity search result, and the apparatus, device and medium thereof provided by the embodiment of the disclosure, in response to a search of a current user for a target search term, a first search result corresponding to the target search term is obtained from a server, wherein the target search term is a search term for an entity object. The first search result is displayed in a result display region of a search result page, wherein the first search result contains at least one sub-search result, different sub-search results correspond to different target search requirements, the target search requirement is a search requirement of the current user, and different sub-search results are displayed in different display sub-regions of the result display region in accordance with requirement intensities of the corresponding target search requirements. Further, a target search term inputted by a current user in a client is obtained, wherein the target search term is a search term for an entity object. At least one target search requirement of the current user is determined based on the target search term and attribute information of the current user. A sub-search result corresponding to each target search requirement is obtained. A first search result containing the obtained sub-search result is generated, and the first search result is sent to the client for display, wherein different sub-search results are displayed in different display sub-regions of a search result page in accordance with requirement intensities of the corresponding search requirements, and the display sub-regions are sub-regions of a result display region in the search result page. With the above solution of the embodiment of the disclosure, the sub-search results in the search results are partitioned and displayed based on the search requirements of the user executing the search, which can improve the accuracy and practicability of the displayed search result, and then improve the search experience of the user.

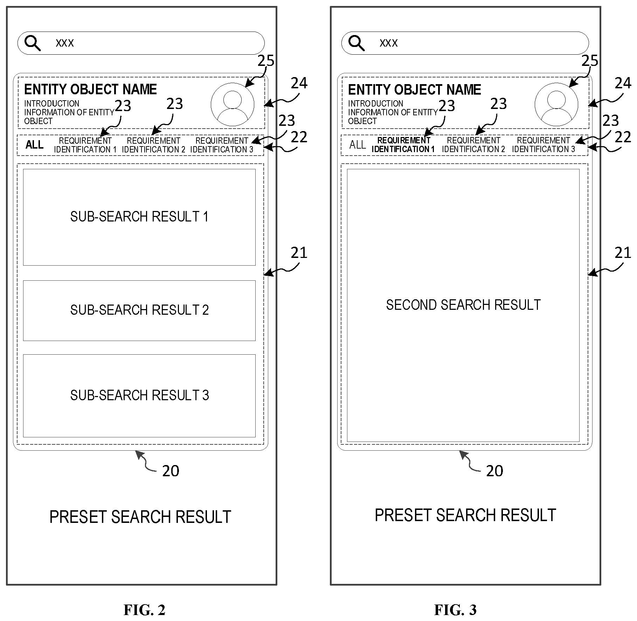

In this embodiment, the display form of the first search result may be set as needed. For example, as shown in FIG. 2, a search result card 20 may be used to display sub-search results corresponding to the target search requirement in the first search result in the search result card 20. For example, the sub-search results corresponding to the target search requirement of the current user are displayed in the result display region 21 of the search result card 20 according to the requirement intensities of the corresponding taget search requirements.

Still referring to FIG. 2, the requirement identification 23 of the at least one target search requirement of the current user may be further displayed in the requirement display region 22 of the search result card 20 according to the requirement intensity of the corresponding target search requirement; and/or the object information of the target entity object is displayed in the object display region 24 of the search result card 20, for example, the identification information and/or the introduction information of the target entity object are displayed.

In addition, in the preset scenario, such as in an activity promotion scenario, the card background of the search result card may be displayed as a background image associated with the current promotion activity, to further enrich the presentation form of the search result card and the content displayed in the search result card. The current promotion activity may be a promotion activity associated with or not associated with the target search term and/or the target entity object, and optionally, the current promotion activity may be a promotion activity associated with the target search term and/or the target entity object.

In this embodiment, the search result may be displayed based on the search requirement of the user performing the search. When the users performing the search are different, even if the search is performed for the same search term, the sub-search results contained in the displayed search result and/or the displayed requirement identifications may be different. Therefore, the search result and/or the requirement identification corresponding to the search requirement of the user can be displayed based on the search requirement of the user, which can improve the accuracy and practicability of the displayed search result, and improve the search experience of the user.

In some implementations, after displaying the first search result in the result display region of the search result page, the method further comprises at least one of: obtaining, in response to a first trigger for the requirement identification, a second search result corresponding to the target search term and a current search requirement from a server, and displaying the second search result in the result display region of the search result page, wherein the current search requirement is a target search requirement corresponding to a requirement identification triggered by the first trigger; displaying an object page of the target entity object in response to a second trigger on target object identification information contained in the object information.

In some embodiments, the first trigger may be an operation of triggering a requirement identification displayed in the requirement display region. The second trigger may be an operation of triggering the target object identification information displayed in the object display region. The current search requirement may be a search requirement corresponding to a requirement identification triggered by the first trigger. The second search result may be a search result corresponding to the target search term and the current search requirement. The target object identification information may be identification information of the target entity object for triggering display of the object page of the target entity object. For example, when the target entity object has a corresponding account in the current application, the target object identification information may be an avatar of the target entity object in the current application.

Specifically, when the first trigger for a requirement identification is received, a second search result corresponding to the target search term and the current search requirement corresponding to the requirement identification may be obtained from the server, and the second search result is displayed in the result display region of the search result page. In this way, the operation required by the user to obtain the search result corresponding to the requirement identification may be further simplified.

For example, when the second trigger for a requirement identification is received, the search request carrying the target search term and the requirement identification of the current search requirement may be sent to the server, the second search result returned by the server based on the search request is received, and the current search result displayed in the result display region 21 of the search result card 20 is switched to the second search result, as shown in FIG. 3.

When the second trigger for the target object identification information is received, the current page may be switched from the search result page to the object page of the target entity object. For example, when the target entity object has a corresponding account in the current application, the current page may be switched from the search result page to the personal page of the target entity object in the current application, so that the current user views detailed information of the target entity object and/or the media content posted by the target entity object in the personal page.

According to the method for displaying an entity search result provided in this embodiment, in response to a search of a current user for a target search term, a first search result corresponding to the target search term is obtained from a server, wherein the target search term is a search term for an entity object. The first search result is displayed in a result display region of a search result page, wherein the first search result contains at least one sub-search result, different sub-search results correspond to different target search requirements, the target search requirement is a search requirement of the current user, and different sub-search results are displayed in different display sub-regions of the result display region in accordance with requirement intensities of the corresponding target search requirements. With the above solution of embodiments of this disclosure, the sub-search results in the search result are partitioned and displayed based on the search requirements of the user executing the search, which can improve the accuracy and practicability of the displayed search result, and then improve the search experience of the user.

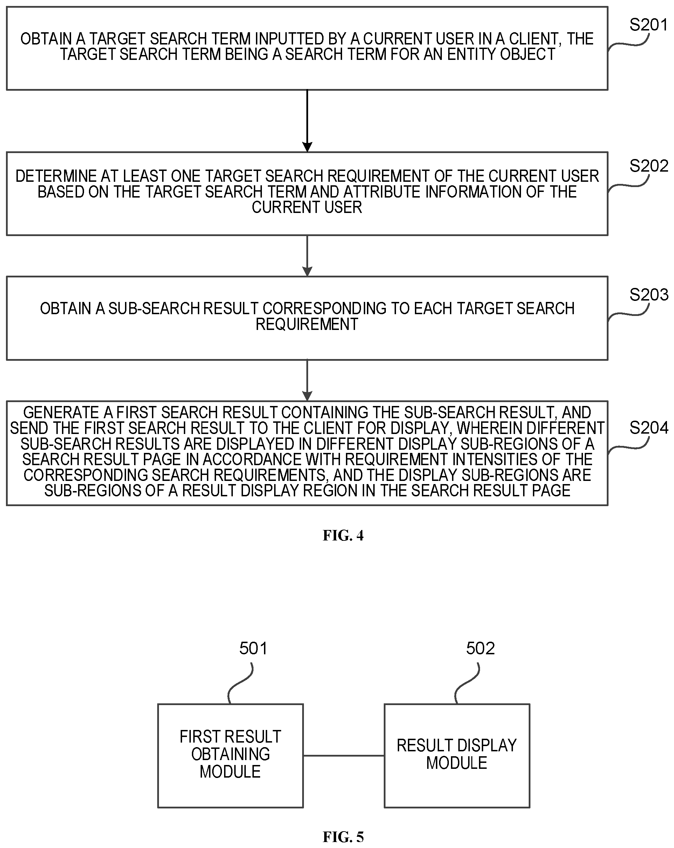

FIG. 4 is a schematic flowchart of a method for generating an entity search result according to an embodiment of the present disclosure. The method may be performed by an apparatus for generating an entity search result, where the apparatus may be implemented by software and/or hardware, may be configured in an electronic device, and is typically configured in a server. The method for generating an entity search result provided by the embodiment of the disclosure is suitable for the scene for searching the entity object, and is especially suitable for the scene in which the entity object is searched based on the video search engine in the video application.

FIG. 4 shows a method for generating an entity search result according to this embodiment.

S201: obtaining a target search term inputted by a current user in a client, the target search term being a search term for an entity object.

Specifically, when receiving the search operation of the current user for the target search term, the client may send the search request carrying the target search term to the server. Correspondingly, after receiving the search request sent by the client, the server may parse the search request to obtain the target search term carried in the search request.

S202: determining at least one target search requirement of the current user based on the target search term and attribute information of the current user.

Currently, in a search engine, the search term of an entity class tends to be relatively high, which are mainly because: a search term of an entity type is relatively easy to be remembered and expressed, and usually only short words such as a person's name and a name of a place need to be remembered; a search term of the entity class may match a large range of content, and for a user who does not know how to express a specific requirement, it is a more convenient search manner to only simply input a person's name and place name. Thus, a very typical feature of a search term of an entity class is that the user requirement is multivariate. Therefore, for the search term of the entity class, if the current search term has multiple dimensions of requirements, it is necessary to determine the search requirement of the current user based on the attribute information of the user, so as to present, as much as possible, the search results satisfying the requirement of the user.

In some embodiments, the target search requirement may be a search requirement that needs to generate and display its corresponding sub-search results, for example, the search requirement with a relatively high search requirement intensity of the current user, said differently, the search requirement that the current user is most interested in finding. The attribute information of the current user may be information used to represent the attribute of the current user, and the type of the attribute is not limited, and may be specifically set as required.

Specifically, when the search request sent by the client is parsed, the user identification information of the current user carried in the search request may be further obtained. The attribute information of the current user is obtained based on the user identification information. The requirement of the current user is analyzed based on the target search term and the attribute information of the current user, to determine the target search requirement with high requirement intensity of the current user.

In this embodiment, the user behavior information corresponding to the target search term may not be considered, and requirement of the current user is analyzed based on the target search term and the attribute information of the current user. Alternatively, the user behavior information corresponding to the target search term may be considered, and the requirement of the current user is analyzed based on the target search term, the user behavior information corresponding to the target search term, and the attribute information of the current user, to improve the accuracy of the determined target search requirement, thereby further improving the accuracy of the generated search result.

At this time, optionally, determining the at least one target search requirement of the current user based on the target search term and the attribute information of the current user comprises: determining the at least one target search requirement of the current user based on the target search term, user behavior information corresponding to the target search term, and the attribute information of the current user, the user behavior information comprising trigger behavior information of a user for the search result corresponding to the target search term in the current application.

In some embodiments, the user behavior information corresponding to a search term (for example, a target search term) may be trigger behavior information of a user in the current application for a search result corresponding to the target search term, for example, trigger frequency information of a user in the current application for a sub-search result corresponding to each search requirement in the target search term.

In some implementations, determining the at least one target search requirement of the current user based on the target search term, the user behavior information corresponding to the target search term, and the attribute information of the current user comprises: determining at least one candidate search requirement of the current user and a requirement intensity of the candidate search requirement based on the target search term, the user behavior information corresponding to the target search term, and the attribute information of the current user; and determining a target candidate requirement in the at least one candidate search requirement based on the requirement intensity of the candidate search requirement.

In some embodiments, the candidate search requirement may be understood as a search requirement to be selected, for example, each original search requirement obtained by performing requirement analysis.

In the foregoing implementation, the at least one candidate search requirement of the current user and the requirement intensity of each candidate search requirement may be determined based on the target search term, the user behavior information corresponding to the target search term, and the attribute information of the current user; and the candidate search requirement with a higher requirement intensity in the at least one candidate search requirement is determined according to the requirement intensity of each candidate search requirement as the target search requirement of the current user.

For example, the keyword analysis and requirement ranking analysis may be performed according to the target search term. When keyword analysis is performed, for example, error correction, generalization, segmentation, and/or semantic analysis may be performed on the target search term, to clean and classify the target search term, and meanwhile, key semantics are extracted from the target search term for subsequent processing. When the requirement ranking analysis is performed, the target search term may be classified, and the statistical behavior feature (that is, the user behavior information) corresponding to the target search term may be combined, and the attribute information of the current user and the special scenario (for example, whether having timeliness, authority, diversity requirement, etc.) are combined, to obtain the intensity of each search requirement (that is, to obtain the requirement intensity of each candidate search requirement), and the search requirements may be ranked in descending order of the requirement intensity to obtain a final requirement ranking result. Here, the manner of performing keyword analysis and requirement ranking analysis is not limited, for example, the keyword analysis may be performed through a pre-trained keyword analysis model, and/or the requirement ranking analysis may be performed through a pre-trained requirement ranking analysis module.

After the requirement ranking result is obtained, the target search requirement of the current user may be determined based on the requirement ranking result, for example, the first *m* search requirements in the requirement ranking result are obtained as the target search requirement, and the search requirements with the requirement intensity greater than or equal to the first requirement intensity threshold in the requirement ranking result are obtained as the target search requirement, or the first *n* search requirements whose sum of the requirement intensities is greater than or equal to the second requirement intensity threshold and the value of *n* is the smallest are obtained as the target search requirement, and so on. Here, *m* and *n* are positive integers, and both the first requirement intensity threshold and the second requirement intensity threshold may be set flexibly, which is not limited in this embodiment.

For example, when one of the search requirements is absolutely dominant, only that search requirement can be regarded as the target search requirement. When the search requirements are multivariate and evenly distributed, that is, when none of the search requirements is the main search requirement, the multiple search requirements can be regarded as target search requirement. When the search requirements are multivariate but have obvious primary and secondary relationships, the primary search requirements can be regarded as the target search requirement, and the secondary search requirements can be dispersed into the preset search results obtained based on the existing technology search for display. The display position of the preset search result is not limited, and as shown in FIG. 2 and FIG. 3, the preset search result may be arranged after the search result card displayed on the search result page for display. The preset search results and the search results (such as the first search result and/or the second search result, etc.) generated by the method for generating an entity search result provided by the embodiment may be deduplicated or not, and may be set as needed.

S203: obtaining a sub-search result corresponding to each target search requirement.

In this embodiment, after determining the target search requirement of the current user, a sub-search result corresponding to each target search requirement may be generated.

Taking a star or a famous person as the target entity object for example, for a target search requirement to know about the basic situation of the target entity object, structured data such as the public introduction, date of birth, height and weight of the target entity object can be obtained to generate a sub-search result corresponding to the target search requirement. For a target search requirement to know about the media content posted by the target entity object in the current application, the account query and the associated content query of the target entity object in the current application may be invoked, and organized into a media content stream to generate a sub-search result corresponding to the target search requirement. For a target search requirement to know about the work of the target entity object (assuming it is a film and television requirement), a professional film and television database may be called to obtain the introduction and link of his/her main works, to generate a sub-search result corresponding to the target search requirement. Further, for a target search requirement to know about the latest news of the target entity object, an index for the news website and a news category video in the current application may be invoked to generate a sub-search result including the latest news information of the target entity object. Therefore, a comprehensive display form of "mainly based on media content and supplemented by various genres" has been formed.

In some implementations, obtaining a sub-search result corresponding to each target search requirement comprises: determining, for each target search requirement, a target resource library corresponding to the target search requirement, wherein different resource libraries store resources corresponding to different search requirements; and querying a target resource corresponding to the target search term from the target resource library, and generating the sub-search result corresponding to the target search requirement based on the target resource.

In the foregoing implementation, resources corresponding to different search requirements may be stored in different resource libraries. For example, basic data such as an age, a birth place, a brief introduction, a person relationship, or the like of the person may be stored through a structured database, or data about objective information, such as a score, a parameter of nature, and the like, to satisfy a search corresponding to a search requirement for the objective information query class; a personal homepage of the entity object in the current application is stored by a database of user links and content in the site, and an association between the personal homepage and the content is performed, so as to satisfy a search corresponding to a search requirement for knowing about the media content posted by the target entity object in the current application; each media resource posted in the current application is stored by using the in-site media content resource library, so as to meet a search corresponding to the search requirement of various dimensions related to the media content; the resource library for introducing resources stores external resources, such as news resources, which are not in the current application itself and introduced from the outside, so as to meet the search corresponding to the search requirements for the news of the target object; and/or, a new resource that is summarized and generated by using the artificial intelligence (AI) means in combination with the capability of the large model is stored by using an AI resource database, to meet the search requirement related to the AI content.

In some embodiments, the target resource library may be a resource library corresponding to the target search requirement, and different resource libraries may be used to store resources corresponding to different search requirements. The target resource may be a resource stored in the target resource library and corresponding to the target search term.

For example, a target resource library corresponding to the target search requirement may be determined for each target search requirement, a target resource matching the target search term is obtained by querying the target resource library based on the target search term, and a sub-search result including at least part of the target resource is generated as a sub-search result corresponding to the target search requirement.

S204: generating a first search result containing the sub-search result, and sending the first search result to the client for display, wherein different sub-search results are displayed in different display sub-regions of a search result page in accordance with requirement intensities of the corresponding search requirements, and the display sub-regions are sub-regions of a result display region in the search result page.

In this embodiment, after obtaining the sub-search results respectively corresponding to each target search requirement, a first search result including each sub-search result may be generated, and the first search result is sent to the client for display.

For a case in which the current user has only one target search requirement, for example, a case in which one search requirement occupies an absolute dominant position, only the sub-search result corresponding to this target search requirement may be sent to the client. Correspondingly, the client may display the sub-search result only in a result display region of the search result page. For a case in which the current user has a plurality of target search requirements, for example, a case in which the search requirements of the current user are multivariate and evenly distributed, and/or, a case in which the search requirements of the current user are multivariate but have obvious primary and secondary relationships, the sub-search results corresponding to the plurality of target search requirements may be all sent to the client. Correspondingly, the client may display, in the result display region of the search result page, the sub-search results respectively corresponding to each target search requirements.

In this embodiment, the first search result further contains a requirement identification of the target search requirement and/or object information of a target entity object in a current application, for the current user to view or perform a corresponding interaction operation based on the requirement identification and/or the object information. In this case, optionally, the first search result further contains a requirement identification of the target search requirement corresponding to the sub-search result and/or object information of a target entity object in a current application, and the target entity object is an entity object corresponding to the target search term.

In addition, in a preset scenario, for example, in an activity promotion scenario, the server may further obtain image information of a background image associated with the current promotion activity, and add the image information to the first search result, so that the client generates and displays a background image of the search result card based on the image information.

In some implementations, the user is supported to view the search result corresponding to the target search requirement in a manner of triggering a requirement identification of a certain target search requirement displayed in the search result page, so as to further simplify the operation required by the user to view the search result that the user actually wants to search. In this case, optionally, after sending the first search result to the client for display, the method further comprises: determining a current search requirement corresponding to the requirement identification triggered by the current user at the client; and generating a second search result corresponding to the target search term and the current search requirement, and sending the second search result to the client for display.

In some embodiments, the current search requirement may be a target search requirement corresponding to a requirement identification triggered by the current user in the search result page. The second search result may be a search result corresponding to the target search term and the current search requirement. The second search result may or may not include the resources included in the sub-search result corresponding to the current search request in the first search result.

For example, when receiving the trigger of the current user for the displayed certain requirement identification, the client may generate a search request carrying the target search term and the requirement identification, and send the search request to the server. Correspondingly, after receiving the search request sent by the client, the server may obtain the target search term and the requirement identification carried in the search request, determine the current search requirement corresponding to the requirement identification and the resource library corresponding to the current search requirement, query the resource library for the resource matching the target search term, and generate the second search result including at least part of the resource obtained by the query.

According to the method for generating an entity search result provided in this embodiment, a target search term inputted by a current user in a client is obtained, wherein the target search term is a search term for an entity object. At least one target search requirement of the current user is determined based on the target search term and attribute information of the current user. A sub-search result corresponding to each target search requirement is obtained. A first search result containing the sub-search result is generated, and the first search result is sent to the client for display, wherein different sub-search results are displayed in different display sub-regions of a search result page in accordance with requirement intensities of the corresponding search requirements, and the display sub-regions are sub-regions of a result display region in the search result page. With the above technical solution of this embodiment, the sub-search results in the search result are partitioned and displayed based on the search requirement of the user executing the search, which can improve the accuracy and practicability of the displayed search result, and then improve the search experience of the user.

FIG. 5 is a structural block diagram of an apparatus for displaying an entity search result according to an embodiment of the present disclosure. The apparatus may be implemented by software and/or hardware, and may be configured in an electronic device, and typically may be configured in a mobile phone or a tablet computer, and may search the entity object by performing the method for displaying an entity search result, for example, search the entity object based on a video search engine in a video application. As shown in FIG. 5, the apparatus for displaying an entity search provided in this embodiment may include a first result obtaining module 501 and a result display module 502. In some embodiments, the first result obtaining module 501 is configured to obtain, in response to a search of a current user for a target search term, a first search result corresponding to the target search term from a server, wherein the target search term is a search term for an entity object; and the result display module 502 is configured to display the first search result in a result display region of a search result page, wherein the first search result contains at least one sub-search result, different sub-search results correspond to different target search requirements, the target search requirement is a search requirement of the current user, and different sub-search results are displayed in different display sub-regions of the result display region in accordance with requirement intensities of the corresponding target search requirements.

According to the apparatus for displaying an entity search result provided in this embodiment, in response to a search of a current user for a target search term, a first search result corresponding to the target search term is obtained by the first result obtaining module from a server, wherein the target search term is a search term for an entity object. The first search result is displayed by the result display module in a result display region of a search result page, wherein the first search result contains at least one sub-search result, different sub-search results correspond to different target search requirements, the target search requirement is a search requirement of the current user, and different sub-search results are displayed in different display sub-regions of the result display region in accordance with requirement intensities of the corresponding target search requirements. With the above technical solution of this embodiment, the sub-search results in the search result are partitioned and displayed based on the search requirement of the user executing the search, which can improve the accuracy and practicability of the displayed search result, and then improve the search experience of the user.

In above solution, the search result page further contains a requirement display region and/or an object display region. A requirement identification of at least one target search requirement is displayed in the requirement display region, and object information of a target entity object in a current application is displayed in the object display region, The target entity object is an entity object corresponding to the target search term.

Further, the apparatus for displaying an entity search result provided in this embodiment may further comprise a third result obtaining module configured to, after displaying the first search result in the result display region of the search result page, obtain, in response to a first trigger for the requirement identification, a second search result corresponding to the target search term and a current search requirement from a server, and display the second search result in the result display region of the search result page, wherein the current search requirement is a target search requirement corresponding to a requirement identification triggered by the first trigger; an object display module configured to, after displaying the first search result in the result display region of the search result page, display an object page of the target entity object in response to a second trigger on target object identification information contained in the object information.

In the above solution, the requirement identification of the at least one target search requirement may be displayed in accordance with the requirement intensity of the corresponding target search requirement.

The apparatus for displaying an entity search result provided by the embodiments of the present disclosure may perform the method for displaying an entity search result provided by any embodiment of the present disclosure, and has functional modules and beneficial effects corresponding to the method for displaying an entity search result. For technical details not described in detail in this embodiment, reference may be made to the method for displaying an entity search result provided by any embodiment of the present disclosure.

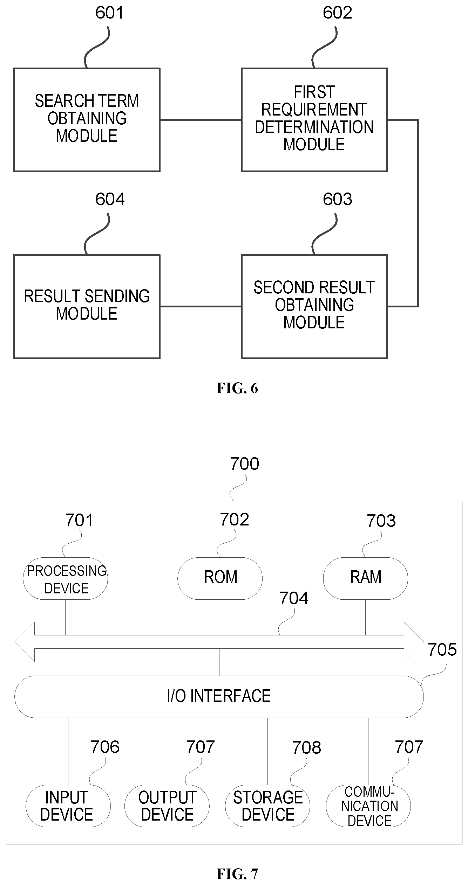

FIG. 6 is a structural block diagram of an apparatus for generating an entity search result according to an embodiment of the present disclosure. The apparatus may be implemented by software and/or hardware, and may be configured in an electronic device, and typically may be configured in a server, and may search an entity object by performing a method for generating an entity search result, for example, search an entity object based on a video search engine in a video application. As shown in FIG. 6, the apparatus for generating an entity search result provided in this embodiment may include: a search term obtaining module 601, a first requirement determination module 602, a second result obtaining module 603, and a result sending module 604. In some embodiments, the search term obtaining module 601 is configured to obtain a target search term inputted by a current user in a client, wherein the target search term is a search term for an entity object. The first requirement determination module 602 is configured to determine at least one target search requirement of the current user based on the target search term and attribute information of the current user. The second result obtaining module 603 is configured to obtain a sub-search result corresponding to each target search requirement. The result sending module 604 is configured to generate a first search result containing the sub-search result, and send the first search result to the client for display, wherein different sub-search results are displayed in different display sub-regions of a search result page in accordance with requirement intensities of the corresponding search requirements, and the display sub-regions are sub-regions of a result display region in the search result page.

With apparatus for generating an entity search result provided by this embodiment, a target search term inputted by a current user in a client is obtained by the search term obtaining module, wherein the target search term is a search term for an entity object. At least one target search requirement of the current user is determined by the first requirement determination module based on the target search term and attribute information of the current user. A sub-search result corresponding to each target search requirement is obtained by the second result obtaining module. With the result sending module, a first search result containing the sub-search result is generated, and the first search result is sent to the client for display, wherein different sub-search results are displayed in different display sub-regions of a search result page in accordance with requirement intensities of the corresponding search requirements, and the display sub-regions are sub-regions of a result display region in the search result page. With the above technical solution of this embodiment, the sub-search results in the search result are partitioned and displayed based on the search requirement of the user executing the search, which can improve the accuracy and practicability of the displayed search result, and then improve the search experience of the user.

In the above solution, the first requirement determination module 602 is configured to: determine the at least one target search requirement of the current user based on the target search term, user behavior information corresponding to the target search term, and the attribute information of the current user, wherein the user behavior information comprises trigger behavior information of a user for the search result corresponding to the target search term in the current application.

In the above solution, the first requirement determination module 602 may comprise: a first determination unit configured to determine at least one candidate search requirement of the current user and a requirement intensity of the candidate search requirement based on the target search term, the user behavior information corresponding to the target search term, and the attribute information of the current user; and a second determination unit configured to determine a target candidate requirement in the at least one candidate search requirement based on the requirement intensity of the candidate search requirement.

In the above solution, the second result obtaining module 603 is configured to: determine, for each target search requirement, a target resource library corresponding to the target search requirement, wherein different resource libraries store resources corresponding to different search requirements; and query a target resource corresponding to the target search term from the target resource library, and generate the sub-search result corresponding to the target search requirement based on the target resource.

In the above solution, the first search result further contains a requirement identification of the target search requirement corresponding to the sub-search result and/or object information of a target entity object in a current application, and the target entity object is an entity object corresponding to the target search term.

Further, the apparatus for generating an entity search result provided by this embodiment may comprise: a second requirement determination module configured to, after sending the first search result to the client for display, determine a current search requirement corresponding to the requirement identification triggered by the current user at the client; and a result generating module configured to generate a second search result corresponding to the target search term and the current search requirement, and send the second search result to the client for display.

The apparatus for generating an entity search result provided by the embodiments of the present disclosure may perform the method for generating an entity search result provided by any embodiment of the present disclosure, and has functional modules and beneficial effects corresponding to the method for generating an entity search result. For technical details not described in detail in this embodiment, reference may be made to the method for generating an entity search result provided by any embodiment of the present disclosure.

Reference is now made to FIG. 7, which is a schematic structural diagram of an electronic device (for example, a terminal device or a server) 700 suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (for example, an in-vehicle navigation terminal), and a fixed terminal such as a digital TV, a desktop computer, or the like. The electronic device shown in FIG. 7 is merely an example, and should not impose any limitation on the functions and scope of use of the embodiments of the present disclosure.

As shown in FIG. 7, the electronic device 700 may comprises processing device (e.g., a central processor, a graphics processor) 701 which is capable of performing various appropriate actions and processes in accordance with programs stored in a read only memory (ROM) 702 or programs loaded from storage device 708 to a random access memory (RAM) 703. In the RAM 703, there are also stored various programs and data required by the electronic device 700 when operating. The processing device 701, the ROM 702 and the RAM 703 are connected to one another via a bus 704. An input/output (I/O) interface 705 is also connected to the bus 704.

Usually, the following devices may be connected to the I/O interface 705: an input device 707 including a touch screen, a touch pad, a keyboard, a mouse, a camera, a microphone, an accelerometers, a gyroscope, or the like; an output device 707, such as a liquid-crystal display (LCD), a loudspeaker, a vibrator, or the like; a storage device 708, such as a magnetic tape, a hard disk or the like; and a communication device 709. The communication device 709 allows the electronic device 700 to perform wireless or wired communication with other device so as to exchange data with other device. While FIG. 7 shows the electronic device 700 with various device, it should be understood that it is not required to implement or have all of the illustrated device. Alternatively, more or less device may be implemented or exist.

Specifically, according to the embodiments of the present disclosure, the procedures described with reference to the flowchart may be implemented as computer software programs. For example, the embodiments of the present disclosure comprise a computer program product that comprises a computer program embodied on a non-transitory computer-readable medium, the computer program including program codes for executing the method shown in the flowchart. In such an embodiment, the computer program may be loaded and installed from a network via the communication device 709, or installed from the storage device 708, or installed from the ROM 702. The computer program, when executed by the processing device 701, perform the above functions defined in the method of the embodiments of the present disclosure.

It is noteworthy that the computer readable medium of the present disclosure can be a computer readable signal medium, a computer readable storage medium or any combination thereof. The computer readable storage medium may be, for example, but is not limited to, an electronic, magnetic, optical, electromagnetic, infrared or semiconductor system, apparatus or device, or any combination of the foregoing. More specific examples of the computer readable storage medium may include, without limitation to, the following: an electrical connection with one or more conductors, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer readable storage medium may be any tangible medium including or storing a program that may be used by or in conjunction with an instruction executing system, apparatus or device. In the present disclosure, the computer readable signal medium may include data signals propagated in the baseband or as part of the carrier waveform, in which computer readable program code is carried. Such propagated data signals may take a variety of forms, including without limitation to electromagnetic signals, optical signals, or any suitable combination of the foregoing. The computer readable signal medium may also be any computer readable medium other than a computer readable storage medium that may send, propagate, or transmit a program for use by, or in conjunction with, an instruction executing system, apparatus, or device. The program code contained on the computer readable medium may be transmitted by any suitable medium, including, but not limited to, a wire, a fiber optic cable, RF (radio frequency), etc., or any suitable combination thereof.

In some implementations, the client and server may communicate utilizing any currently known or future developed network protocol such as HTTP (HyperText Transfer Protocol) and may be interconnected with digital data communications (e.g., communication networks) of any form or medium. Examples of communication networks include local area networks ("LANs"), wide area networks ("WANs"), inter-networks (e.g., the Internet), and end-to-end networks (e.g., ad hoc end-to-end networks), as well as any currently known or future developed networks.

The above computer readable medium may be contained in the above electronic device; or it may exist separately and not be assembled into the electronic device.

The above computer readable medium carries one or more programs which, when executed by the electronic device, cause the electronic device to: obtain, in response to a search of a current user for a target search term, a first search result corresponding to the target search term from a server, the target search term being a search term for an entity object; and display the first search result in a result display region of a search result page, the first search result containing at least one sub-search result, different sub-search results corresponding to different target search requirements, the target search requirement being a search requirement of the current user, and different sub-search results being displayed in different display sub-regions of the result display region in accordance with requirement intensities of the corresponding target search requirements.

A target search term inputted by a current user in a client is obtained, wherein the target search term is a search term for an entity object. At least one target search requirement of the current user is determined based on the target search term and attribute information of the current user. A sub-search result corresponding to each target search requirement is obtained. A first search result containing the sub-search result is generated, and the first search result is sent to the client for display, wherein different sub-search results are displayed in different display sub-regions of a search result page in accordance with requirement intensities of the corresponding search requirements, and the display sub-regions are sub-regions of a result display region in the search result page.

Computer program code for carrying out operations of the present disclosure may be written in one or more program designing languages or a combination thereof, which include without limitation to an object oriented programming language such as Java, Smalltalk, C++ or the like, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Units involved in the embodiments of the present disclosure as described may be implemented in software or hardware. The name of a unit does not form any limitation on the module itself.

The functionality described above may at least partly be performed, at least in part, by one or more hardware logic components. For example, and in a non-limiting sense, example types of hardware logic components that can be used may include: field-programmable gate arrays (FPGA), application specific integrated circuits (ASICs), application specific standard products (ASSPs), systems on chips (SOCs), complex programmable logic devices (CPLDs), etc.

In the context of the present disclosure, the machine readable medium may be a tangible medium that can retain and store programs for use by or in conjunction with an instruction execution system, apparatus or device. The machine readable medium of the present disclosure can be a machine readable signal medium or a machine readable storage medium. The machine readable medium may include, but is not limited to, an electronic, magnetic, optical, electromagnetic, infrared or semiconductor system, apparatus or device, or any combination of the foregoing. More specific examples of the machine readable storage medium may include, without limitation to, the following: an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of this disclosure, example 1 provides a method for displaying an entity search result, comprising: obtaining, in response to a search of a current user for a target search term, a first search result corresponding to the target search term from a server, the target search term being a search term for an entity object; and displaying the first search result in a result display region of a search result page, the first search result containing at least one sub-search result, different sub-search results corresponding to different target search requirements, the target search requirement being a search requirement of the current user, and different sub-search results being displayed in different display sub-regions of the result display region in accordance with requirement intensities of the corresponding target search requirements.

According to one or more embodiments of this disclosure, the method of example 2 according to example 1, the search result page further contains a requirement display region and/or an object display region, a requirement identification of at least one target search requirement is displayed in the requirement display region, object information of a target entity object in a current application is displayed in the object display region, and the target entity object is an entity object corresponding to the target search term.

According to one or more embodiments of this disclosure, the method of example 3 according to example 2, after displaying the first search result in the result display region of the search result page, the method further comprises at least one of: obtaining, in response to a first trigger for the requirement identification, a second search result corresponding to the target search term and a current search requirement from a server, and displaying the second search result in the result display region of the search result page, wherein the current search requirement is a target search requirement corresponding to a requirement identification triggered by the first trigger; displaying an object page of the target entity object in response to a second trigger on target object identification information contained in the object information.

According to one or more embodiments of this disclosure, the method of example 4 according to example 2, the requirement identification of the at least one target search requirement is displayed in accordance with the requirement intensity of the corresponding target search requirement.

According to one or more embodiments of this disclosure, example 5 provides a method for generating an entity search result, comprising: obtaining a target search term inputted by a current user in a client, the target search term being a search term for an entity object; determining at least one target search requirement of the current user based on the target search term and attribute information of the current user; obtaining a sub-search result corresponding to each target search requirement; and generating a first search result containing the sub-search result, and sending the first search result to the client for display, wherein different sub-search results are displayed in different display sub-regions of a search result page in accordance with requirement intensities of the corresponding search requirements, and the display sub-regions are sub-regions of a result display region in the search result page.

According to one or more embodiments of this disclosure, the method of example 6 according to example 5, determining the at least one target search requirement of the current user based on the target search term and the attribute information of the current user comprises: determining the at least one target search requirement of the current user based on the target search term, user behavior information corresponding to the target search term, and the attribute information of the current user, the user behavior information comprising trigger behavior information of a user for the search result corresponding to the target search term in the current application.

According to one or more embodiments of this disclosure, the method of example 7 according to example 6, determining the at least one target search requirement of the current user based on the target search term, the user behavior information corresponding to the target search term, and the attribute information of the current user comprises: determining at least one candidate search requirement of the current user and a requirement intensity of the candidate search requirement based on the target search term, the user behavior information corresponding to the target search term, and the attribute information of the current user; and determining a target candidate requirement in the at least one candidate search requirement based on the requirement intensity of the candidate search requirement.

According to one or more embodiments of this disclosure, the method of example 8 according to example 5, obtaining a sub-search result corresponding to each target search requirement comprises: determining, for each target search requirement, a target resource library corresponding to the target search requirement, wherein different resource libraries store resources corresponding to different search requirements; and querying a target resource corresponding to the target search term from the target resource library, and generating the sub-search result corresponding to the target search requirement based on the target resource.

According to one or more embodiments of this disclosure, the method of example 9 according to any of examples 5-8, the first search result further contains a requirement identification of the target search requirement corresponding to the sub-search result and/or object information of a target entity object in a current application, and the target entity object is an entity object corresponding to the target search term.

According to one or more embodiments of this disclosure, the method of example 10 according to example 9, after sending the first search result to the client for display, the method further comprises: determining a current search requirement corresponding to the requirement identification triggered by the current user at the client; and generating a second search result corresponding to the target search term and the current search requirement, and sending the second search result to the client for display.

According to one or more embodiments of this disclosure, example 11 provides an apparatus for displaying an entity search result, comprising: a first result obtaining module configured to obtain, in response to a search of a current user for a target search term, a first search result corresponding to the target search term from a server, the target search term being a search term for an entity object; and a result display module configured to display the first search result in a result display region of a search result page, the first search result containing at least one sub-search result, different sub-search results corresponding to different target search requirements, the target search requirement being a search requirement of the current user, and different sub-search results being displayed in different display sub-regions of the result display region in accordance with requirement intensities of the corresponding target search requirements.

According to one or more embodiments of this disclosure, example 12 provides an apparatus for generating an entity search result, comprising: a search term obtaining module configured to obtain a target search term inputted by a current user in a client, the target search term being a search term for an entity object; a first requirement determination module configured to determine at least one target search requirement of the current user based on the target search term and attribute information of the current user; a second result obtaining module configured to obtain a sub-search result corresponding to each target search requirement; and a result sending module configured to generate a first search result containing the sub-search result, and send the first search result to the client for display, wherein different sub-search results are displayed in different display sub-regions of a search result page in accordance with requirement intensities of the corresponding search requirements, and the display sub-regions are sub-regions of a result display region in the search result page.

According to one or more embodiments of this disclosure, example 13 provides an electronic device, comprising: one or more processors; and a memory storing one or more computer programs that, when executed by the one or more processors, cause the one or more processors to perform a method for displaying an entity search result or a method for generating an entity search result according to any one of examples 1-10.

According to one or more embodiments of this disclosure, example 14 provides a computer-readable storage medium storing computer instructions that, when executed by a processor, implement a method for displaying an entity search result or a method for generating an entity search result according to any one of examples 1-10.

The foregoing description is merely illustration of the preferred embodiments of the present disclosure and the technical principles used herein. Those skilled in the art should understand that the disclosure scope involved therein is not limited to the technical solutions formed from a particular combination of the above technical features, but should also cover other technical solutions formed by any combination of the above technical features or their equivalent features without departing from the above disclosure concepts, e.g., technical solutions formed by replacing the above features with technical features having similar functions disclosed (without limitation) in the present disclosure.

**In** addition, although various operations have been depicted in a particular order, it should not be construed as requiring that the operations be performed in the particular order shown or in sequential order of execution. Multitasking and parallel processing may be advantageous in certain environments. Likewise, although the foregoing discussion includes several specific implementation details, they should not be construed as limiting the scope of the present disclosure. Some features described in the context of separate embodiments may also be realized in combination in a single embodiment. On the contrary, various features described in the context of a single embodiment may also be realized in a plurality of embodiments, either individually or in any suitable sub-combinations.

While the present subject matter has been described using language specific to structural features and/or method logic actions, it should be understood that the subject matter defined in the appended claims is not necessarily limited to the particular features or actions described above. On the contrary, the particular features and actions described above are merely example forms of realizing the claims.

## Claims

1. A method for displaying an entity search result, comprising:
obtaining, in response to a search of a current user for a target search term, a first search result corresponding to the target search term from a server, the target search term being a search term for an entity object; and
displaying the first search result in a result display region of a search result page, the first search result containing at least one sub-search result, different sub-search results corresponding to different target search requirements, the target search requirement being a search requirement of the current user, and different sub-search results being displayed in different display sub-regions of the result display region in accordance with requirement intensities of the corresponding target search requirements.

2. The method of claim 1, wherein the search result page further contains a requirement display region and/or an object display region, a requirement identification of at least one target search requirement is displayed in the requirement display region, object information of a target entity object in a current application is displayed in the object display region, and the target entity object is an entity object corresponding to the target search term.

3. The method of claim 2, wherein after displaying the first search result in the result display region of the search result page, the method further comprises at least one of:
obtaining, in response to a first trigger for the requirement identification, a second search result corresponding to the target search term and a current search requirement from a server, and displaying the second search result in the result display region of the search result page, wherein the current search requirement is a target search requirement corresponding to a requirement identification triggered by the first trigger; or
displaying an object page of the target entity object in response to a second trigger on target object identification information contained in the object information.

4. The method of claim 2, wherein the requirement identification of the at least one target search requirement is displayed in accordance with the requirement intensity of the corresponding target search requirement.

5. A method for generating an entity search result, comprising:
obtaining a target search term inputted by a current user in a client, the target search term being a search term for an entity object;
determining at least one target search requirement of the current user based on the target search term and attribute information of the current user;
obtaining a sub-search result corresponding to each target search requirement; and
generating a first search result containing the sub-search result, and sending the first search result to the client for display, wherein different sub-search results are displayed in different display sub-regions of a search result page in accordance with requirement intensities of the corresponding search requirements, and the display sub-regions are sub-regions of a result display region in the search result page.

6. The method of claim 5, wherein determining the at least one target search requirement of the current user based on the target search term and the attribute information of the current user comprises:
determining the at least one target search requirement of the current user based on the target search term, user behavior information corresponding to the target search term, and the attribute information of the current user, the user behavior information comprising trigger behavior information of a user for the search result corresponding to the target search term in the current application.

7. The method of claim 6, wherein determining the at least one target search requirement of the current user based on the target search term, the user behavior information corresponding to the target search term, and the attribute information of the current user comprises:
determining at least one candidate search requirement of the current user and a requirement intensity of the candidate search requirement based on the target search term, the user behavior information corresponding to the target search term, and the attribute information of the current user; and
determining a target candidate requirement in the at least one candidate search requirement based on the requirement intensity of the candidate search requirement.

8. The method of claim 5, wherein obtaining a sub-search result corresponding to each target search requirement comprises:
determining, for each target search requirement, a target resource library corresponding to the target search requirement, wherein different resource libraries store resources corresponding to different search requirements; and
querying a target resource corresponding to the target search term from the target resource library, and generating the sub-search result corresponding to the target search requirement based on the target resource.

9. The method of any of claims 5-8, wherein the first search result further contains a requirement identification of the target search requirement corresponding to the sub-search result and/or object information of a target entity object in a current application, and the target entity object is an entity object corresponding to the target search term.

10. The method of claim 9, wherein after sending the first search result to the client for display, the method further comprises:
determining a current search requirement corresponding to the requirement identification triggered by the current user at the client; and
generating a second search result corresponding to the target search term and the current search requirement, and sending the second search result to the client for display.

11. An apparatus for displaying an entity search result, comprising:
a first result obtaining module configured to obtain, in response to a search of a current user for a target search term, a first search result corresponding to the target search term from a server, the target search term being a search term for an entity object; and
a result display module configured to display the first search result in a result display region of a search result page, the first search result containing at least one sub-search result, different sub-search results corresponding to different target search requirements, the target search requirement being a search requirement of the current user, and different sub-search results being displayed in different display sub-regions of the result display region in accordance with requirement intensities of the corresponding target search requirements.

12. An apparatus for generating an entity search result, comprising:
a search term obtaining module configured to obtain a target search term inputted by a current user in a client, the target search term being a search term for an entity object;
a first requirement determination module configured to determine at least one target search requirement of the current user based on the target search term and attribute information of the current user;
a second result obtaining module configured to obtain a sub-search result corresponding to each target search requirement; and
a result sending module configured to generate a first search result containing the sub-search result, and send the first search result to the client for display, wherein different sub-search results are displayed in different display sub-regions of a search result page in accordance with requirement intensities of the corresponding search requirements, and the display sub-regions are sub-regions of a result display region in the search result page.

13. An electronic device, comprising:
at least one processor; and
a memory communicatively connected to the at least one processor; wherein,
the memory stores a computer program executable by the at least one processor, the computer program is executed by the at least one processor to enable the at least one processor to perform the method according to any one of claims 1-10.

14. A computer-readable storage medium storing computer instructions that, when executed by a processor, cause the processor to implement the method according to any one of claims 1-10.
